# EUROPEAN PATENT SPECIFICATION

(11) **EP 3 879 301 B1**
(45) Date of publication and mention of the grant of the patent: **30.07.2025**
(21) Application number: 20161700.8
(22) Date of filing: 09.03.2020
(51) Int. Cl.: G01S 7/40, G01S 13/931, G06G 7/78, G01S 13/89

(54) **RADAR TARGET SIMULATION SYSTEM AND METHOD**
RADARZIELSIMULATIONSSYSTEM UND -VERFAHREN
SYSTÈME ET PROCÉDÉ DE SIMULATION DE CIBLES DE RADAR

(43) Date of publication of application: 15.09.2021
(73) Proprietor: Rohde & Schwarz GmbH & Co. KG, 81671 München (DE)
(72) Inventor: Neidhardt, Steffen, 84405 Dorfen (DE); Mikhailov, Yassen, 82319 Starnberg (DE)
(74) Representative: Novagraaf Group

(56) References cited:
- CN-A- 108 037 492
- US-A- 5 177 488
- US-B1- 9 575 161

## Description

The invention relates to radar target simulation system adaptable to the respective resolution of a device under test and a corresponding method.

Generally, in times of an increasing number of application employing radar systems such as advanced driver assistance system or autonomous vehicles, there is a growing need of a radar target simulation system and a radar target simulation method for performing measurements with respect to such applications in order to verify their correct functioning.

CN 101281249 A relates to a method for modeling radar cross sections (RCS) scattering characteristics of a high-resolution synthetic aperture radar (SAR) target by using the graphic electromagnetic computing (GRECO) principle and radar modeling simulation imaging technology. However, in accordance with said document, no resolution adaption with respect to a device under test is provided, which disadvantageously leads to a limited accuracy and a reduced efficiency. US 5177488 A, US 9575161 B1 and CN 108037492 A are also relevant prior art.

Accordingly, there is the object to provide a radar target simulation system and a radar target simulation method in order to allow for performing measurements with respect to a device under test, especially a device under test employing radar, in a flexible manner, thereby ensuring a high accuracy and efficiency of the measurement.

This object is solved by the features of the first independent claim for a radar target simulation system adaptable to the respective resolution of a device under test and the features of the second independent claim for a radar target simulation method. The dependent claims contain further developments.

According to a first aspect of the invention, a radar target simulation system adaptable to the respective resolution of a device under test is provided. The radar target simulation system comprises a memory unit, an interface, and a modifying unit. In this context, the memory unit is configured to save at least one data set representing at least one radar target simulation scenario and comprising at least one identifiable element, the interface is configured to specify parameters of a desired resolution for the device under test, and the modifying unit is configured to modify the at least one identifiable element so that it falls within the respective resolution parameters of the device under test. Advantageously, in this manner, both a high accuracy and a high efficiency are ensured. Further advantageously, said system allows for any desired scaling with respect to target resolution and adaption.

According to a first preferred implementation form of the first aspect of the invention, modifying the at least one identifiable element comprises at least one of making a cross section bigger, reducing distance from the device under test, increasing distance from the device under test, making two targets at a greater angle from one another, removing at least one interfering element, preferably at least one cell phone and/or at least one car radar especially of another car, or any combination thereof. Advantageously, for instance, complexity can be reduced, thereby further increasing efficiency.

According to a second preferred implementation form of the first aspect of the invention, the radar target simulation system further comprises a selection unit. In this context, the selection unit is configured to select only the respective data sets which meet the respective resolution parameters for running for the costumer especially in the case that the at least one radar target simulation scenario and/or the at least one identifiable element is not modified. Advantageously, for example, inefficiencies are further reduced.

According to a further preferred implementation form of the first aspect of the invention, the radar target simulation system further comprises a radio frequency lens. In this context, the radio frequency lens is configured to make at least one respective radio frequency wave planar. Advantageously, for instance, accuracy is further increased.

According to a further preferred implementation form of the first aspect of the invention, the radar target simulation system further comprises a scaling unit. In this context, the scaling unit is configured to scale down and/or up the respective radio frequency pixels especially of the radar target simulation system preferably to be aligned with the respective radar resolution. Advantageously, for example, not only accuracy but also efficiency can further be increased. Further advantageously, especially in the case of the usage of several radars such as within the scope of production lines or in the case of employing MIMO (multiple input multiple output) for an ISA (intelligent speed adaption) system, resolutions for different radars and/or a known resolution for each of these can be preprogrammed.

According to a further preferred implementation form of the first aspect of the invention, for the case that the radar target simulation system does not already comprise a scaling unit, the radar target simulation system further comprises a scaling unit. In addition to this, the scaling unit is configured to scale the respective radio frequency receive pixels especially of the radar target simulation system preferably to be aligned with the respective desired radar resolution. Advantageously, for instance, both inaccuracies and inefficiencies can further be reduced.

According to a further preferred implementation form of the first aspect of the invention, the radar target simulation system further comprises an adjusting unit. In this context, the adjusting unit is configured to adjust the respective resolution of the corresponding receive side. Advantageously, for example, accuracy can further be increased in a particularly efficient manner.

According to a further preferred implementation form of the first aspect of the invention, the at least one radar target simulation scenario comprises or is at least one image, preferably at least one radar image, more preferably at least one radar target image, most preferably at least one radar target simulation image. Advantageously, for instance, complexity can further be reduced, which leads to an increased efficiency.

According to a second aspect of the invention, a radar target simulation method is provided. Said radar target simulation method comprises the steps of saving at least one data set representing at least one radar target simulation scenario and comprising at least one identifiable element, specifying parameters of a desired resolution for a device under test, and modifying the at least one identifiable element so that it falls within the respective resolution parameters of the device under test. Advantageously, in this manner, both a high accuracy and a high efficiency are ensured. Further advantageously, said method allows for any desired scaling with respect to target resolution and adaption.

According to a first preferred implementation form of the second aspect of the invention, modifying the at least one identifiable element comprises at least one of making a cross section bigger, reducing distance from the device under test, increasing distance from the device under test, making two targets at a greater angle from one another, removing at least one interfering element, preferably at least one cell phone and/or at least one car radar especially of another car, or any combination thereof. Advantageously, for instance, complexity can be reduced, thereby further increasing efficiency.

According to a second preferred implementation form of the second aspect of the invention, the radar target simulation method further comprises the step of selecting only the respective data sets which meet the respective resolution parameters for running for the costumer especially in the case that the at least one radar target simulation scenario and/or the at least one identifiable element are/is not modified. Advantageously, for example, inefficiencies are further reduced.

According to a further preferred implementation form of the second aspect of the invention, the radar target simulation method further comprises the step of making at least one respective radio frequency wave planar preferably with the aid of a radio frequency lens. Advantageously, for instance, accuracy is further increased.

According to a further preferred implementation form of the second aspect of the invention, the radar target simulation method further comprises the step of scaling down and/or up the respective radio frequency pixels preferably to be aligned with the respective radar resolution. Advantageously, for example, not only accuracy but also efficiency can further be increased. Further advantageously, especially in the case of the usage of several radars such as within the scope of production lines or in the case of employing MIMO (multiple input multiple output) for an ISA (intelligent speed adaption) system, resolutions for different radars and/or a known resolution for each of these can be preprogrammed.

According to a further preferred implementation form of the second aspect of the invention, the radar target simulation method further comprises the step of scaling the respective radio frequency receive pixels preferably to be aligned with the respective desired radar resolution. Advantageously, for instance, both inaccuracies and inefficiencies can further be reduced.

According to a further preferred implementation form of the second aspect of the invention, the radar target simulation method further comprises the step of adjusting the respective resolution of the corresponding receive side. Advantageously, for example, accuracy can further be increased in a particularly efficient manner.

Exemplary embodiments of the invention are now further explained with respect to the drawings by way of example only, and not for limitation. In the drawings:
- Fig. 1: shows an exemplary embodiment of an inventive radar target simulation system;
- Fig. 2: shows a further exemplary embodiment of an inventive radar target simulation system;
- Fig. 3: shows exemplary different degree resolutions for the respective beam steering especially in the context of an autonomous car; and
- Fig. 4: shows a flow chart of an embodiment of the second aspect of the invention.

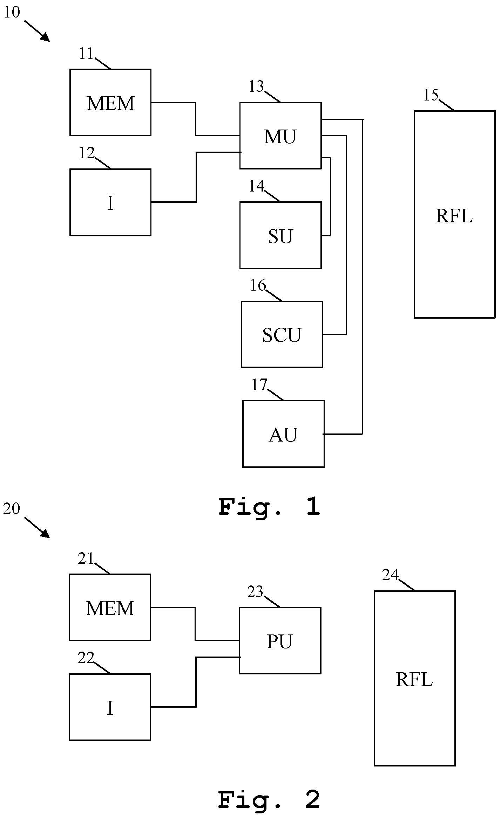

With respect to Fig. 1, a block diagram of an exemplary embodiment of radar target simulation system 10 adaptable to the respective resolution of a device under test is shown, wherein the radar target simulation system 10 comprises a memory unit 11, an interface 12, and a modifying unit 13.

In this context, the memory unit 11 is configured to save at least one data set representing at least one radar target simulation scenario and comprising at least one identifiable element. The interface 12 is configured to specify parameters of a desired resolution for the device under test. In addition to this, the modifying unit 13 is configured to modify the at least one identifiable element so that it falls within the respective resolution parameters of the device under test.

Exemplarily, the memory unit 11 is connected to the modifying unit 13, whereas the interface 12 is also connected to the modifying unit 13. With respect to the modifying unit 13, it is noted that said modifying unit 13 may especially comprise or be a processing unit or a processor.

Furthermore, with respect to said resolution, it is noted that resolution can exemplarily be or mean a minimum angle where it should distinguish between two targets, a minimum radar cross section, maximum and/or minimum distance to a respective target especially for target recognition, a number of radio frequency pixels especially related to the respective accuracy of the corresponding system, or any combination thereof.

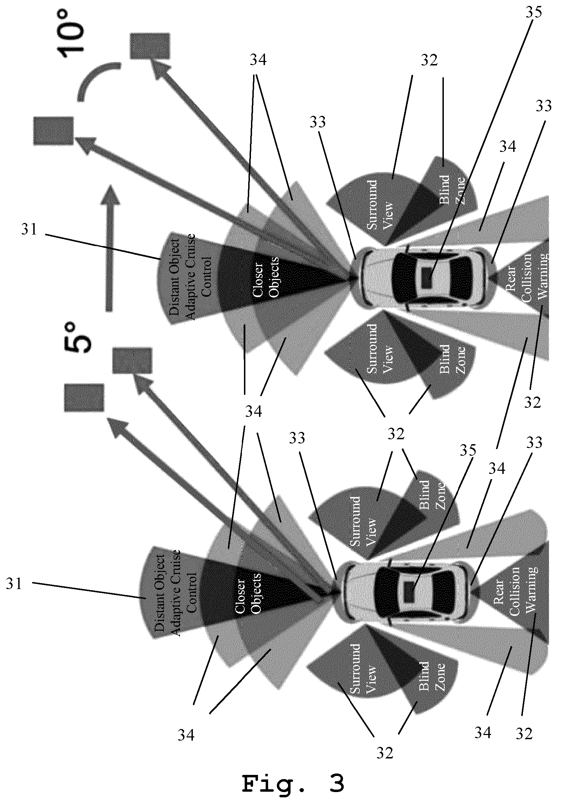

As it can further be seen, a scalability is provided, which may especially adjust the respective radar itself. This may exemplarily require increasing the respective resolution (for instance, angle between objects or radio frequency pixels) and/or decreasing the respective resolution. Increasing and/or decreasing may especially comprise removing and/or adding objects and/or test elements such as modules. For instance, more modules can physically or logically be added in order to get a 5-degree resolution as opposed to a 10-degree or 20-degree resolution especially for the respective beam steering as exemplarily illustrated by Fig. 3.

With respect to said Fig. 3, it is noted that the exemplary different degree resolutions of 5 degree or 10 degree, respectively, are especially shown in the context of an autonomous car 35.

As it can be seen, said autonomous car 35 comprises long radars 31, especially for recognizing and/or identifying distant objects and/or for an adaptive cruise control, cameras 32, preferably stereo and/or monocular cameras, especially for a surround view and/or monitoring the respective blind zone, ultrasonic sensors 33, especially for rear collision warning. Additionally, the autonomous car 35 comprises light detection and ranging (LiDAR) and/or laser detection and ranging (LaDAR) and/or synthetic aperture radar (SAR) systems 34, especially for obstacle detection with special respect to closer objects.

Again, with respect to Fig. 1, it might be particularly advantageous if modifying the at least one identifiable element comprises at least one of making a cross section bigger, reducing distance from the device under test, increasing distance from the device under test, making two targets at a greater angle from one another, removing at least one interfering element, preferably at least one cell phone and/or at least one car radar especially of another car, or any combination thereof.

In accordance with Fig. 1, the radar target simulation system 10 further comprises a selection unit 14. In this context, the selection unit 14 is configured to select only the respective data sets which meet the respective resolution parameters for running for the costumer especially in the case that the at least one radar target simulation scenario and/or the at least one identifiable element is not modified.

Exemplarily, said selection unit 14 is connected to the modifying unit 13. Additionally or alternatively, the selection unit 14 may be connected to the memory unit 11 and/or the interface 12. With respect to the selection unit 14, it is noted that said selection unit 14 may especially comprise or be a processing unit or a processor, preferably the processing unit or processor already mentioned above.

As it can further be seen, the radar target simulation system 10 further comprises a radio frequency lens 15. Said radio frequency lens 15 is configured to make at least one respective radio frequency wave planar.

Moreover, the radar target simulation system 10 further comprises a scaling unit 16. In this context, the scaling unit 16 is configured to scale down and/or up the respective radio frequency pixels especially of the radar target simulation system preferably to be aligned with the respective radar resolution.

Exemplarily, said scaling unit 16 is connected to the modifying unit 13. Additionally or alternatively, the scaling unit 16 may be connected to the memory unit 11 and/or the interface 12. With respect to the scaling unit 16, it is noted that said scaling unit 16 may especially comprise or be a processing unit or a processor, preferably the processing unit or processor already mentioned above.

It might be particularly advantageous if the scaling unit 16 is further configured to scale the respective radio frequency receive pixels especially of the radar target simulation system 10 preferably to be aligned with the respective desired radar resolution.

According to Fig. 1, the radar target simulation system 10 further comprises an adjusting unit 17. In this context, the adjusting unit 17 is configured to adjust the respective resolution of the corresponding receive side. Exemplarily, said adjusting unit 17 is connected to the modifying unit 13. Additionally or alternatively, the adjusting unit 17 may be connected to the memory unit 11 and/or the interface 12. With respect to the adjusting unit 17, it is noted that said adjusting unit 17 may especially comprise or be a processing unit or a processor, preferably the processing unit or processor already mentioned above.

With respect to the at least one radar target simulation scenario, it is noted that it might be particularly advantageous if said at least one radar target simulation scenario comprises or is at least one image, preferably at least one radar image, more preferably at least one radar target image, most preferably at least one radar target simulation image.

With general respect to the invention, regarding both the inventive system and the inventive method, it is noted that it might be particularly advantageous if meta data is used for radar target generation. In this context, said meta data may preferably be generated on the basis of an adaption with respect to the desired target system. Further advantageously, the respective data and/or said meta data may preferably be scalable to the corresponding application.

Furthermore, Fig. 2 shows another embodiment of an inventive radar target simulation system 20 adaptable to the respective resolution of a device under test. The radar target simulation system 20 comprises a memory unit 21, an interface 22, and a processing unit 23 or a processor. In this context, the memory unit 21 is configured to save at least one data set representing at least one radar target simulation scenario and comprising at least one identifiable element. In addition to this, the interface 22 is configured to specify parameters of a desired resolution for the device under test. Further additionally, the processing unit 23 or the processor, respectively, is configured to modify the at least one identifiable element so that it falls within the respective resolution parameters of the device under test.

Furthermore, modifying the at least one identifiable element may preferably comprise at least one of making a cross section bigger, reducing distance from the device under test, increasing distance from the device under test, making two targets at a greater angle from one another, removing at least one interfering element, preferably at least one cell phone and/or at least one car radar especially of another car, or any combination thereof.

Moreover, it might be particularly advantageous if the processing unit 23 or the processor, respectively, is configured to select only the respective data sets which meet the respective resolution parameters for running for the costumer especially in the case that the at least one radar target simulation scenario and/or the at least one identifiable element is not modified.

In accordance with Fig. 2, the radar target simulation system 20 further comprises a radio frequency lens 24. In this context, the radio frequency lens 24 is configured to make at least one respective radio frequency wave planar. Again, with respect to the processing unit 23 or the processor, respectively, the processing unit 23 or the processor is configured to scale down and/or up the respective radio frequency pixels especially of the radar target simulation system 20 preferably to be aligned with the respective radar resolution.

It is noted that it might be particularly advantageous if the processing unit 23 or the processor, respectively, is further configured to scale the respective radio frequency receive pixels especially of the radar target simulation system preferably to be aligned with the respective desired radar resolution. In addition to this or as an alternative, the processing unit 23 or the processor, respectively, may especially be configured to adjust the respective resolution of the corresponding receive side.

As already noted with respect to Fig. 1, the at least one radar target simulation scenario may especially comprise or be at least one image, preferably at least one radar image, more preferably at least one radar target image, most preferably at least one radar target simulation image.

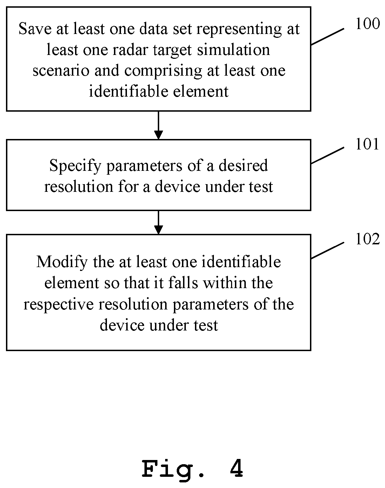

Finally, Fig. 4 shows a flow chart of an embodiment of the inventive method. In a first step 100, at least one data set representing at least one radar target simulation scenario and comprising at least one identifiable element is saved. Then, in a second step 101, parameters of a desired resolution are specified for a device under test. Furthermore, in a third step 102, the at least one identifiable element is modified so that it falls within the respective resolution parameters of the device under test.

While various embodiments of the present invention have been described above, it should be understood that they have been presented by way of example only, and not limitation. Numerous changes to the disclosed embodiments can be made in accordance with the disclosure herein without departing from the scope of the invention. Thus, the breadth and scope of the present invention should not be limited by any of the above described embodiments. Rather, the scope of the invention should be defined in accordance with the following claims.

Although the invention has been illustrated and described with respect to one or more implementations, equivalent alterations and modifications will occur to others skilled in the art upon the reading and understanding of this specification and the annexed drawings. In addition, while a particular feature of the invention may have been disclosed with respect to only one of several implementations, such feature may be combined with one or more other features of the other implementations as may be desired and advantageous for any given or particular application.

## Claims

1. A radar target simulation system (10) allowing for performing measurements with respect to a device under test employing radar, and adaptable to the respective resolution of the device under test, the radar target simulation system (10) comprising:
a memory unit (11),
an interface (12), and
a modifying unit (13),
wherein the memory unit (11) is configured to save at least one data set representing at least one radar target simulation scenario and comprising at least one identifiable element,
wherein the at least one radar target simulation scenario comprises or is at least one image, wherein the interface (12) is configured to specify parameters of a desired resolution for the device under test,
wherein the resolution is a minimum angle to distinguish two targets or a minimum radar cross-section or maximum and/or minimum distance to the respective target or number of pixels related to the respective accuracy of the corresponding system, or any combination thereof,
wherein the modifying unit (13) is configured to modify the at least one identifiable element so that it falls within the respective resolution parameters of the device under test, and
wherein modifying the at least one identifiable element comprises at least one of making a cross section bigger, reducing distance from the device under test, increasing distance from the device under test, making the two targets at a greater angle from one another.

2. The radar target simulation system (10) according to claim 1,
wherein at least one interfering element comprises at least one cell phone and/or at least one car radar especially of another car, or any combination thereof and wherein removing the at least one interfering element.

3. The radar target simulation system (10) according to claim 1 or 2,
wherein the radar target simulation system (10) further comprises a selection unit (14),
wherein the selection unit (14) is configured to select only the respective data sets which meet the respective resolution parameters for a customer especially in the case that at least one radar target simulation scenario and/or the at least one identifiable element is not modified.

4. The radar target simulation system (10) according to claim 1 or 2,
wherein the radar target simulation system (10) further comprises a radio frequency lens (15),
wherein the radio frequency lens (15) is configured to make at least one respective radio frequency wave planar.

5. The radar target simulation system (10) according to any of the claims 1 to 4,
wherein the radar target simulation system (10) further comprises a scaling unit (16),
wherein the scaling unit (16) is configured to scale down and/or up the respective pixels especially of the radar target simulation system (10) preferably to be aligned with the respective radar resolution.

6. The radar target simulation system (10) according to any of the claims 1 to 4,
wherein the radar target simulation system (10) further comprises a scaling unit (16), and
wherein the scaling unit (16) is configured to scale the respective receive pixels especially of the radar target simulation system (10) preferably to be aligned with the respective desired radar resolution.

7. The radar target simulation system (10) according to any of the claims 1 to 6,
wherein the radar target simulation system (10) further comprises an adjusting unit (17),
wherein the adjusting unit (17) is configured to adjust the respective resolution of a corresponding receive side.

8. The radar target simulation system (10) according to any of the claims 1 to 7,
wherein the at least one radar target simulation scenario comprises or is at least one radar image, more preferably at least one radar target image, most preferably at least one radar target simulation image.

9. A radar target simulation method for performing measurements with respect to a device under test employing radar,
the method comprising the steps of:
saving at least one data set representing at least one radar target simulation scenario and comprising at least one identifiable element,
wherein the at least one radar target simulation scenario comprises or is at least one image, specifying parameters of a desired resolution for a device under test,
wherein the resolution is a minimum angle to distinguish two targets or a minimum radar cross-section or maximum and/or minimum distance to the respective target or number of pixels related to the respective accuracy of the corresponding system, or any combination thereof, modifying the at least one identifiable element so that it falls within the respective resolution parameters of the device under test, wherein modifying the at least one identifiable element comprises at least one of making a cross section bigger, reducing distance from the device under test, increasing distance from the device under test, making the two targets at a greater angle from one another.

10. The radar target simulation method according to claim 9,
wherein at least one interfering element comprises at least one cell phone and/or at least one car radar especially of another car, or any combination thereof, and
wherein removing the at least one interfering element.

11. The radar target simulation method according to claim 9 or 10,
wherein the radar target simulation method further comprises the step of selecting only the respective data sets which meet the respective resolution parameters for a customer especially in the case that the at least one radar target simulation scenario and/or the at least one identifiable element are/is not modified.

12. The radar target simulation method according to claim 9 or 11,
wherein the radar target simulation method further comprises the step of making at least one respective radio frequency wave planar preferably with the aid of a radio frequency lens.

13. The radar target simulation method according to any of the claims 9 to 12,
wherein the radar target simulation method further comprises the step of scaling down and/or up the respective pixels preferably to be aligned with the respective radar resolution.

14. The radar target simulation method according to any of the claims 9 to 13,
wherein the radar target simulation method further comprises the step of scaling the respective receive pixels preferably to be aligned with the respective desired radar resolution.

15. The radar target simulation method according to any of the claims 9 to 14,
wherein the radar target simulation method further comprises the step of adjusting the respective resolution of a corresponding receive side.

## Patentansprüche

1. Radarzielsimulationssystem (10), das ein Durchführen von Messungen in Bezug auf einen Prüfling unter Verwendung von Radar ermöglicht und an die jeweilige Auflösung des Prüflings anpassbar ist, das Radarzielsimulationssystem (10) umfassend:
eine Speichereinheit (11),
eine Schnittstelle (12), und
eine Modifizierungseinheit (13),
wobei die Speichereinheit (11) konfiguriert ist, um mindestens einen Datensatz zu speichern, der mindestens ein Radarzielsimulationsszenario darstellt und mindestens ein identifizierbares Element umfasst,
wobei das mindestens eine Radarzielsimulationsszenario mindestens ein Bild umfasst oder ist, wobei die Schnittstelle (12) konfiguriert ist, um Parameter einer gewünschten Auflösung für den Prüfling anzugeben,
wobei die Auflösung ein minimaler Winkel, um zwei Ziele zu unterscheiden, oder ein minimaler Radarquerschnitt oder ein maximaler und/oder minimaler Abstand zu dem jeweiligen Ziel oder eine Anzahl von Pixeln in Bezug auf die jeweilige Genauigkeit des entsprechenden Systems oder eine beliebige Kombination davon ist,
wobei die Modifizierungseinheit (13) konfiguriert ist, um das mindestens eine identifizierbare Element so zu modifizieren, dass es innerhalb der jeweiligen Auflösungsparameter des Prüflings liegt, und
wobei das Modifizieren des mindestens einen identifizierbaren Elements mindestens eines von Vergrößern eines Querschnitts, Verringern des Abstands von dem Prüfling, Erhöhen des Abstands von dem Prüfling, Anordnen der zwei Ziele in einem größeren Winkel zueinander umfasst.

2. Radarzielsimulationssystem (10) nach Anspruch 1,
wobei mindestens ein Störelement mindestens ein Mobiltelefon und/oder mindestens ein Kraftfahrzeugradar, insbesondere eines anderen Kraftfahrzeugs, oder eine beliebige Kombination davon umfasst und wobei das mindestens eine Störelement entfernt wird.

3. Radarzielsimulationssystem (10) nach Anspruch 1 oder 2,
wobei das Radarzielsimulationssystem (10) ferner eine Auswahleinheit (14) umfasst,
wobei die Auswahleinheit (14) konfiguriert ist, um nur die jeweiligen Datensätze auszuwählen, die die jeweiligen Auflösungsparameter für einen Kunden erfüllen, insbesondere für den Fall, dass mindestens ein Radarzielsimulationsszenario und/oder das mindestens eine identifizierbare Element nicht modifiziert wird.

4. Radarzielsimulationssystem (10) nach Anspruch 1 oder 2,
wobei das Radarzielsimulationssystem (10) ferner eine Funkfrequenzlinse (15) umfasst,
wobei die Funkfrequenzlinse (15) konfiguriert ist, um mindestens eine jeweilige Funkfrequenzwelle eben zu machen.

5. Radarzielsimulationssystem (10) nach einem der Ansprüche 1 bis 4,
wobei das Radarzielsimulationssystem (10) ferner eine Skalierungseinheit (16) umfasst,
wobei die Skalierungseinheit (16) konfiguriert ist, um die jeweiligen Pixel insbesondere des Radarzielsimulationssystems (10) herauf- und/oder herunterzuskalieren, vorzugsweise um an die jeweilige Radarauflösung angepasst zu sein.

6. Radarzielsimulationssystem (10) nach einem der Ansprüche 1 bis 4,
wobei das Radarzielsimulationssystem (10) ferner eine Skalierungseinheit (16) umfasst, und
wobei die Skalierungseinheit (16) konfiguriert ist, um die jeweiligen Empfangspixel insbesondere des Radarzielsimulationssystems (10) zu skalieren, vorzugsweise um an die jeweils gewünschte Radarauflösung angepasst zu sein.

7. Radarzielsimulationssystem (10) nach einem der Ansprüche 1 bis 6,
wobei das Radarzielsimulationssystem (10) ferner eine Einstelleinheit (17) umfasst,
wobei die Einstelleinheit (17) konfiguriert ist, um die jeweilige Auflösung einer entsprechenden Empfangsseite einzustellen.

8. Radarzielsimulationssystem (10) nach einem der Ansprüche 1 bis 7,
wobei das mindestens eine Radarzielsimulationsszenario mindestens ein Radarbild umfasst oder ist, mehr bevorzugt mindestens ein Radarzielbild, am meisten bevorzugt mindestens ein Radarzielsimulationsbild.

9. Radarzielsimulationsverfahren zum Durchführen von Messungen in Bezug auf einen Prüfling unter Verwendung von Radar,
das Verfahren umfassend die Schritte:
Speichern mindestens eines Datensatzes, der mindestens ein Radarzielsimulationsszenario darstellt und mindestens ein identifizierbares Element umfasst,
wobei das mindestens eine Radarzielsimulationsszenario mindestens ein Bild umfasst oder ist, das Parameter einer gewünschten Auflösung für einen Prüfling angibt,
wobei die Auflösung ein minimaler Winkel, um zwei Ziele zu unterscheiden, oder ein minimaler Radarquerschnitt oder ein maximaler und/oder minimaler Abstand zu dem jeweiligen Ziel oder eine Anzahl von Pixeln in Bezug auf die jeweilige Genauigkeit des entsprechenden Systems oder eine beliebige Kombination davon ist, Modifizieren des mindestens einen identifizierbaren Elements, sodass es innerhalb der jeweiligen Auflösungsparameter des Prüflings liegt, wobei das Modifizieren des mindestens einen identifizierbaren Elements mindestens eines von Vergrößern eines Querschnitts, Verringern des Abstands von dem Prüfling, Erhöhen des Abstands von dem Prüfling, Anordnen der zwei Ziele in einem größeren Winkel zueinander umfasst.

10. Radarzielsimulationssystem nach Anspruch 9,
wobei mindestens ein Störelement mindestens ein Mobiltelefon und/oder mindestens ein Kraftfahrzeugradar, insbesondere eines anderen Kraftfahrzeugs, oder eine beliebige Kombination davon umfasst, und
wobei das mindestens eine Störelement entfernt wird.

11. Radarzielsimulationssystem nach Anspruch 9 oder 10,
wobei das Radarzielsimulationsverfahren ferner den Schritt zum Auswählen nur der jeweiligen Datensätze umfasst, die die jeweiligen Auflösungsparameter für einen Kunden erfüllen, insbesondere in dem Fall, dass das mindestens eine Radarzielsimulationsszenario und/oder das mindestens eine identifizierbare Element nicht modifiziert wird.

12. Radarzielsimulationssystem nach Anspruch 9 oder 11,
wobei das Radarzielsimulationsverfahren ferner den Schritt zum Ebnen mindestens einer jeweiligen Funkfrequenzwelle vorzugsweise mit Hilfe einer Funkfrequenzlinse umfasst.

13. Radarzielsimulationssystem nach einem der Ansprüche 9 bis 12,
wobei das Radarzielsimulationsverfahren ferner den Schritt zum Herunter- und/oder Heraufskalieren der jeweiligen Pixel umfasst, vorzugsweise um an die jeweilige Radarauflösung angepasst zu sein.

14. Radarzielsimulationssystem nach einem der Ansprüche 9 bis 13,
wobei das Radarzielsimulationsverfahren ferner den Schritt zum Skalieren der jeweiligen Empfangspixel umfasst, vorzugsweise um an die jeweils gewünschte Radarauflösung angepasst zu sein.

15. Radarzielsimulationssystem nach einem der Ansprüche 9 bis 14,
wobei das Radarzielsimulationsverfahren ferner den Schritt zum Einstellen der jeweiligen Auflösung einer entsprechenden Empfangsseite umfasst.

## Revendications

1. Système de simulation de cible radar (10) permettant de réaliser des mesures par rapport à un dispositif testé utilisant un radar, et adaptable à la résolution respective du dispositif testé, le système de simulation de cible radar (10) comprenant :
une unité de mémoire (11),
une interface (12), et
une unité de modification (13),
dans lequel l'unité de mémoire (11) est conçue pour sauvegarder au moins un ensemble de données représentant au moins un scénario de simulation de cible radar et comprenant au moins un élément identifiable,
dans lequel l'au moins un scénario de simulation de cible radar comprend ou est au moins une image, dans lequel l'interface (12) est conçue pour spécifier des paramètres d'une résolution souhaitée pour le dispositif testé,
dans lequel la résolution est un angle minimal pour distinguer deux cibles ou une section transversale radar minimale ou une distance maximale et/ou minimale par rapport à la cible respective ou un nombre de pixels se rapportant à la précision respective du système correspondant, ou une quelconque combinaison de ceux-ci,
dans lequel l'unité de modification (13) est conçue pour modifier l'au moins un élément identifiable de sorte qu'il se trouve au sein des paramètres de résolution respectifs du dispositif testé, et
dans lequel la modification de l'au moins un élément identifiable comprend au moins l'un parmi le fait d'amener la section transversale à être plus grande, la réduction de la distance par rapport au dispositif testé, l'augmentation de la distance par rapport au dispositif testé, le fait d'amener les deux cibles à avoir un angle supérieur l'une par rapport à l'autre.

2. Système de simulation de cible radar (10) selon la revendication 1,
dans lequel au moins un élément d'interférence comprend au moins un téléphone portable et/ou au moins un radar de voiture en particulier d'une autre voiture, ou une quelconque combinaison de ceux-ci et dans lequel l'élimination de l'au moins un élément d'interférence.

3. Système de simulation de cible radar (10) selon la revendication 1 ou 2,
dans lequel le système de simulation de cible radar (10) comprend en outre une unité de sélection (14),
dans lequel l'unité de sélection (14) est conçue pour sélectionner uniquement les ensembles de données respectifs qui satisfont aux paramètres de résolution respectifs pour un client en particulier dans le cas où au moins un scénario de simulation de cible radar et/ou l'au moins un élément identifiable n'est pas modifié.

4. Système de simulation de cible radar (10) selon la revendication 1 ou 2,
dans lequel le système de simulation de cible radar (10) comprend en outre une lentille de radiofréquence (15),
dans lequel la lentille de radiofréquence (15) est conçue pour amener au moins une onde de radiofréquence respective à être planaire.

5. Système de simulation de cible radar (10) selon l'une quelconque des revendications 1 à 4,
dans lequel le système de simulation de cible radar (10) comprend en outre une unité de mise à l'échelle (16),
dans lequel l'unité de mise à l'échelle (16) est conçue pour diminuer l'échelle et/ou accroître l'échelle des pixels respectifs du système de simulation de cible radar (10) de préférence pour qu'ils soient alignés sur la résolution de radar respective.

6. Système de simulation de cible radar (10) selon l'une quelconque des revendications 1 à 4,
dans lequel le système de simulation de cible radar (10) comprend en outre une unité de mise à l'échelle (16), et
dans lequel l'unité de mise à l'échelle (16) est conçue pour mettre à l'échelle les pixels de réception respectifs en particulier du système de simulation de cible radar (10) de préférence pour qu'ils soient alignés sur la résolution de radar souhaitée respective.

7. Système de simulation de cible radar (10) selon l'une quelconque des revendications 1 à 6,
dans lequel le système de simulation de cible radar (10) comprend en outre une unité de réglage (17),
dans lequel l'unité de réglage (17) est conçue pour régler la résolution respective d'une face de réception correspondante.

8. Système de simulation de cible radar (10) selon l'une quelconque des revendications 1 à 7,
dans lequel l'au moins un scénario de simulation de cible radar comprend ou est au moins une image radar, plus préférablement au moins une image de cible radar, le plus préférablement au moins une image de simulation de cible radar.

9. Procédé de simulation de cible radar permettant de réaliser des mesures par rapport à un dispositif testé utilisant un radar,
le procédé comprenant les étapes consistant à :
sauvegarder au moins un ensemble de données représentant au moins un scénario de simulation de cible radar et comprenant au moins un élément identifiable,
dans lequel l'au moins un scénario de simulation de cible radar comprend ou est au moins une image, spécifiant des paramètres d'une résolution souhaitée pour un dispositif testé,
dans lequel la résolution est un angle minimal pour distinguer deux cibles ou une section transversale radar minimale ou une distance maximale et/ou minimale par rapport à la cible respective ou un nombre de pixels se rapportant à la précision respective du système correspondant, ou une quelconque combinaison de ceux-ci, modifier l'au moins un élément identifiable de sorte qu'il se trouve au sein des paramètres de résolution respectifs du dispositif testé, dans lequel la modification de l'au moins un élément identifiable comprend au moins l'un parmi le fait d'amener la section transversale à être plus grande, la réduction de la distance par rapport au dispositif testé, l'augmentation de la distance par rapport au dispositif testé, le fait d'amener les deux cibles à avoir un angle supérieur l'une par rapport à l'autre.

10. Procédé de simulation de cible radar selon la revendication 9,
dans lequel au moins un élément d'interférence comprend au moins un téléphone portable et/ou au moins un radar de voiture en particulier d'une autre voiture, ou une quelconque combinaison de ceux-ci, et
dans lequel l'élimination de l'au moins un élément d'interférence.

11. Procédé de simulation de cible radar selon la revendication 9 ou 10,
dans lequel le procédé de simulation de cible radar comprend en outre l'étape consistant à sélectionner uniquement les ensembles de données respectifs qui satisfont aux paramètres de résolution respectifs pour un client en particulier dans le cas où l'au moins un scénario de simulation de cible radar et/ou l'au moins un élément identifiable n'est/ne sont pas modifié(s).

12. Procédé de simulation de cible radar selon la revendication 9 ou 11,
dans lequel le procédé de simulation de cible radar comprend en outre l'étape consistant à amener au moins une onde de radiofréquence respective à être planaire de préférence au moyen d'une lentille de radiofréquence.

13. Procédé de simulation de cible radar selon l'une quelconque des revendications 9 à 12,
dans lequel le procédé de simulation de cible radar comprend en outre l'étape consistant à diminuer l'échelle et/ou accroître l'échelle des pixels respectifs de préférence pour qu'ils soient alignés sur la résolution de radar respective.

14. Procédé de simulation de cible radar selon l'une quelconque des revendications 9 à 13,
dans lequel le procédé de simulation de cible radar comprend en outre l'étape consistant à mettre à l'échelle les pixels de réception respectifs de préférence pour qu'ils soient alignés sur la résolution de radar souhaitée respective.

15. Procédé de simulation de cible radar selon l'une quelconque des revendications 9 à 14,
dans lequel le procédé de simulation de cible radar comprend en outre l'étape consistant à régler la résolution respective d'un côté de réception correspondant.
